# EUROPEAN PATENT SPECIFICATION

(11) **EP 1 281 113 B1**
(45) Date of publication and mention of the grant of the patent: **13.12.2006**
(21) Application number: 01921554.0
(22) Date of filing: 10.04.2001
(51) Int. Cl.: G06F 1/16

(54) **COMPUTER STORAGE UNIT**
LAGERUNGSEINHEIT FÜR COMPUTER
UNITE DE STOCKAGE D'ORDINATEURS

(30) Priority: 10.04.2000 GB 0008761; 28.06.2000 GB 0015858; 29.09.2000 GB 0023960
(43) Date of publication of application: 05.02.2003
(73) Proprietor: Haggerty, Michael J., Colchester, Essex CO4 4JS (GB)
(72) Inventor: Haggerty, Michael J., Colchester, Essex CO4 4JS (GB)
(74) Representative: Suèr, Steven Johannes
(86) International application number: PCT/GB2001/001620
(87) International publication number: WO 2001/077799

(56) References cited:
- EP-A- 0 809 174
- EP-A- 1 016 951
- GB-A- 2 336 049
- US-A- 5 621 890
- US-A- 6 008 621

## Description

The present invention relates to computer storage units and particularly, though not exclusively, to those capable of accommodating laptop computers.

The recent expansion in the use of computers and now laptop computers in academic institutions and business situations has led to the need for multiple user systems. The relative mobility of laptop computers has made them particularly attractive in for example schools, where they can be brought to the relevant classroom, rather than a dedicated room being assigned to their use. This for example enables the extent of the computers' usage to be broadened, such that they can be utilised in classrooms catering for different lessons, e.g. from science to art. Further, a classroom using mobile computers can be set up almost anywhere.

In the business environment, the mobility of laptop computers enhances the possibilities of so-called "hot desking".

Computers are however still relatively expensive and complex articles and with mobility comes each of the problems of their ready location, their identification, their recharging, storage, their security and their transport. Also, whilst laptop computers provide mobility, they can consequently leave the user isolated. In relation to their transport, due to their combined weight, the transportation of a number of computers at once can be dangerous for a single person to attempt. This can put both the health of the carrier and the safety of the computers at risk.

Storage units exist for housing a plurality of computers.

These units currently take the form of static or mobile cupboard-like containers which can be secured by means of locks or the like to deter theft. Whilst such known storage units afford a limited degree of mobility and security, they can not allow ready transport of a plurality of computers together in a safe, protected environment over anything other than level unobstructed terrain. Hence, within for example a building they are limited to use in a particular room or floor.

US 5 621 890A discloses a storage unit for a plurality of computers, the storage unit comprising a plurality of computer docking stations, the unit being arranged into one or more modules of like docking stations.

IE 80 932B discloses a storage unit for a plurality of computers, the storage unit comprising a plurality of cradles into which laptop computers may be placed in an upright position for recharging.

GB 2 336 049A discloses a docking apparatus for a plurality of hand-held computers, the docking apparatus comprising a plurality of interlocking computer docking bays into which laptop computers may be placed for the transmission of information between a central processing unit and the laptop computer.

US 6 008 621A discloses a portable computer charging system and storage cart having a plurality of storage bays in which laptop computers may be placed for recharging.

An object of the present invention is therefore to provide apparatus seeking to overcome the problems in relation to the above.

According to the present invention there is provided a lockable storage unit for securely storing and recharging a plurality of computers therein, the storage unit comprising a plurality of computer docking stations, the unit being characterized in that the docking stations are arranged into a plurality of discrete modules (A, B) of like docking stations; wherein each module is provided with an independent power recharging circuit and dedicated charging connectors compatible with the computers to be received in the docking stations of that module, thereby allowing computers of different specifications to be stored and recharged within different modules of the unit.

In this respect, the technical specifications of computers vary between different brands, both in terms of external physical dimensions and characteristics as well as in terms of internal component requirements, such as power supply details. With the present invention, the modular nature of the storage unit allows a plurality of dedicated modules to be provided catering for specific types of computer. Conveniently, each module comprises a dedicated transformer.

Preferably, the docking stations of a module are physically configured only to accept computers appropriate to that module. If a computer is offered to a docking station that is inappropriate then it will be readily apparent that the computer needs to be stored elsewhere.

Conveniently, the docking stations of a particular module are marked so that they can be matched with particular computers. Preferably, the marking includes colour.

In preferred embodiments, the entrances to the docking stations are shaped to permit only computers appropriate to that module.

Preferably, the unit further comprises a communication link for linking the unit to the computers, a network or other similar storage units. Conveniently, the communication link is a radio or infra-red link. A telecommunications link affords many advantages. For example, it can act as an anti-theft device in that computers linked can be readily traced. Further, in this regard the telecommunications means can be set up to define a local perimeter within which the linked computers can be used, any computer straying outside of that perimeter triggering an alarm indication. The use of such a link, e.g. a radio or infra-red link, further can allow the storage unit to interact with a remote network so that information can be passed between the computers and the computer network via the storage unit.

The use of several storage units with the ability to communicate with each other, preferably by a telecommunications link such as a radio link, can allow the establishment of a modular network formed of a plurality of such units.

In preferred embodiments, power is provided to said unit through a power supply interface which is provided to said unit. Attaching the power supply interface to an outer surface of the unit readily allows connection to an external power supply for receipt of power in use or for charging purposes. Providing the interface on an outer surface also makes the unit more compact and allows ready access for repair.

Conveniently, said power supply interface also acts as a data interface. Incorporating the data interface with the power supply interface helps to make the unit more compact by cutting down the amount of wiring required.

Preferably, said external power supply provides power for said charging circuits.

In preferred embodiments, said power supply interface further comprises radio connection means for enabling the radio link between the unit and one or more of said computers or a separate hardware item such as a remote screen.

Conveniently, said power supply interface further comprises power outlets to which computers can be connected. This allows multiple items of computer hardware to be powered-up in the vicinity of the storage unit.

Preferably, said power supply interface further comprises a manual switch for disengaging said electrical charging point/terminals. This manual switch allows a user to interrupt the charging process if a laptop computer is needed.

Providing modules of docking stations allows a collection of computers to be built up in a step-wise fashion. For example, this is particularly useful in schools where computers, perhaps of different brands may only be purchased periodically.

Conveniently, an internal portion of said unit is provided with a dedicated general storage area. Computer hardware such as tower servers or printers can be located in this storage area for use with the associated laptop computers.

Preferably, said general storage area is provided with a retractable, slidable platform surface. This allows easy access to any objects such as computer hardware which may be located in the storage area.

In preferred embodiments, said storage unit is mobile. Conveniently, said unit takes the form of a wheeled trolley. The use of a mobile unit such as a wheeled trolley allows a user flexibility in positioning the storage unit.

There is also described herein a storage unit for a plurality of computers, the storage unit comprising a plurality of computer docking stations, the storage unit further comprising a screen unit which includes a screen communication link with the storage unit. The screen communication link may be a radio or infra-red link.

The screen unit may be of a white board touch screen variety.

There is also described herein a computer retaining module for releasably holding one or more computers, the module being insertable into a computer storage unit, the module comprising a dedicated transformer and circuitry for connecting to a power source coupling provided on the storage unit.

There is also described herein a storage unit for a plurality of computers comprising a plurality of computer docking stations, each said docking station being provided with an electrical charging point/terminal, the unit further comprising a means for providing a communication link between said storage unit and one or more of said computers.

The communication link may be a telecommunications link for example a radio or infra-red link. A telecommunications link affords many advantages. For example, it can act as an anti-theft device in that computers linked can be readily traced. Further, in this regard the telecommunications means can be set up to define a local perimeter within which the linked computers can be used, any computer straying outside of that perimeter triggering an alarm indication.

There is also described herein a storage unit for a plurality of computers comprising a plurality of computer docking stations; each said docking station being provided with an electrical charging point/terminal, and wherein the unit further comprises a means for proving a communication link between said storage unit and a computer network.

The use of such a link, e.g. a radio or infra-red link, allows the storage unit to interact with a remote network so that information can be passed between the computers and the computer network via the storage unit.

There is also described herein a storage unit for a plurality of computers comprising a plurality of computer docking stations, each said docking station being provided with an electrical charging point/terminal, and wherein the unit further comprises a means for providing a communication link between said storage unit and one or more similar storage units.

The use of several storage units with the ability to communicate with each other, preferably by a telecommunications link such as a radio link, can allow the establishment of a modular network formed of a plurality of such units.

The unit may be further provided with a dedicated server. Such a server may be configured to run a network so that where a computer is itself in radio contact with a storage unit having such a server, the computer user can have live remote contact with the network provided by that unit, affording enhanced freedom of movement within a given range.
Where the unit communicates with other networks or is part of a modular network set up with similar units, a computer user can have access to such further networks.

The use of the storage unit as an intermediary to networks in this way reduces the amount of hardwiring required in, for example schools, universities, offices, factories or the like. Moreover, the use of radio links is also much more convenient than connection of computers to networks via a combination of a modem and a telephone.

Power may be provided to said unit through a power supply interface which is secured to said unit. Attaching the power supply interface to an outer surface of the unit readily allows connection to an external power supply for receipt of power in use or for charging purposes. Providing the interface on an outer surface also makes the unit more compact and allows ready access for repair.

The power supply interface may also act as a data interface. Incorporating the data interface with the power supply interface helps to make the unit more compact by cutting down the amount of wiring required.

The external power supply may provide power for said electrical charging point/terminals.

The power supply interface may further comprise radio connection means for enabling the radio link between the unit and one or more of said computers.

The power supply interface may further comprise power outlets to which computers can be connected. This allows multiple items of computer hardware to be powered-up in the vicinity of the storage unit.

The power supply interface may further comprise a manual switch for disengaging said electrical charging point/terminals. This manual switch allows a user to interrupt the charging process if a laptop computer is needed.

The docking stations may be provided in a modular fashion inside said unit. This allows a collection of computers to be built up in a step-wise fashion.

For example, this is particularly useful in schools where computers may only be purchased periodically.

An internal portion of said unit may be provided with a dedicated general storage area. Computer hardware such as tower servers or printers can be located in this storage area for use with the associated laptop computers.

The general storage area may be provided with a retractable, slidable platform surface. This allows easy access to any objects such as computer hardware which is located in the storage area.

The unit may be mobile. Conveniently, said unit may take the form of a wheeled trolley. The use of a mobile unit such as a wheeled trolley allows a' user flexibility in positioning the storage unit.

There is also described herein a storage unit for a plurality of computers comprising:
a frame carrying a securable enclosure housing a plurality of computer docking stations, the frame having a handle at one end and a wheel assembly at another end, the frame being pivotable about the wheel assembly from an immobile position to a mobile position for allowing transport of the unit on the wheel assembly.

With such an arrangement, the unit can be readily transported from one location to another. The wheel assembly may comprise a single pair of wheels. As such the manoeuverability of the unit is substantially enhanced allowing greater freedom of movement of the unit, whilst still affording security and protection to any computers housed therein.

The handle may comprise a first support which together with the wheel assembly forms a first stand for holding the securable enclosure in a first orientation. The wheel assembly end of the frame may further comprise a second support which together with the wheel assembly forms a second stand for holding the securable enclosure in a second orientation. As such, the unit offers two stable resting orientations, where the enclosure can be safely opened and computers installed or removed. Conveniently, the first and second orientations are substantially at right angles to one another. With the unit positioned in the second orientation the "footprint" of the unit is minimised such that it can be placed in environments where space is limited.

The first support may be pivotably mounted on the frame. In this way it can be dropped down when required to afford a support function but folded out of the way when the handle is in use for transporting the unit.

The handle may be configured to seat in a vehicle boot and conveniently has a hooked configuration. In this way, the unit can be hitched to a vehicle boot facilitating the transfer of computers between the vehicle and the unit. The handle may be telescopically adjustable in length to increase its flexibility of use.

One or more of the docking stations may be provided with a recharging facility. Hence, computers housed within the unit can be charged as they are stored. Conveniently, each discrete docking station is provided with a power recharging facility. The docking stations are physically configured to accept preselected computers.

The unit may have a securable lid, which may be alarmed. Conveniently, the unit further comprises a communication link for linking the unit to remote computers, a network or other similar units. Such a communication link may be a radio or infra-red link.

There is also described herein a storage unit for a plurality of computers, the unit comprising a frame carrying a storage bay, said storage bay comprising a plurality of discrete computer docking stations, the frame further comprising a wheel assembly at a first end and a hook at a second end for seating the second end within the boot of a vehicle.

The securable enclosure may be removably attachable to the frame.

The present invention will now be described by way of example and with reference to the following Figures, wherein:-
Figure 1 illustrates a front perspective view of an embodiment of a storage unit of the present invention;
Figure 2 shows a rear perspective view of the storage unit of Figure 1;
Figure 3 illustrates a storage unit of a second embodiment;
Figure 4 shows a storage unit of a third embodiment;
Figure 5 illustrates a perspective view of a fourth embodiment of a mobile storage unit;
Figure 6 shows an expanded view of the storage areas and electrical charging connections of Figure 5;
Figure 7 illustrates the mobile storage unit of Figure 5 with one external door open;
Figure 8 illustrates a perspective view of a computer storage unit;
Figure 9 illustrates a perspective view of a transit enclosure for use with the storage unit of Figure 8.

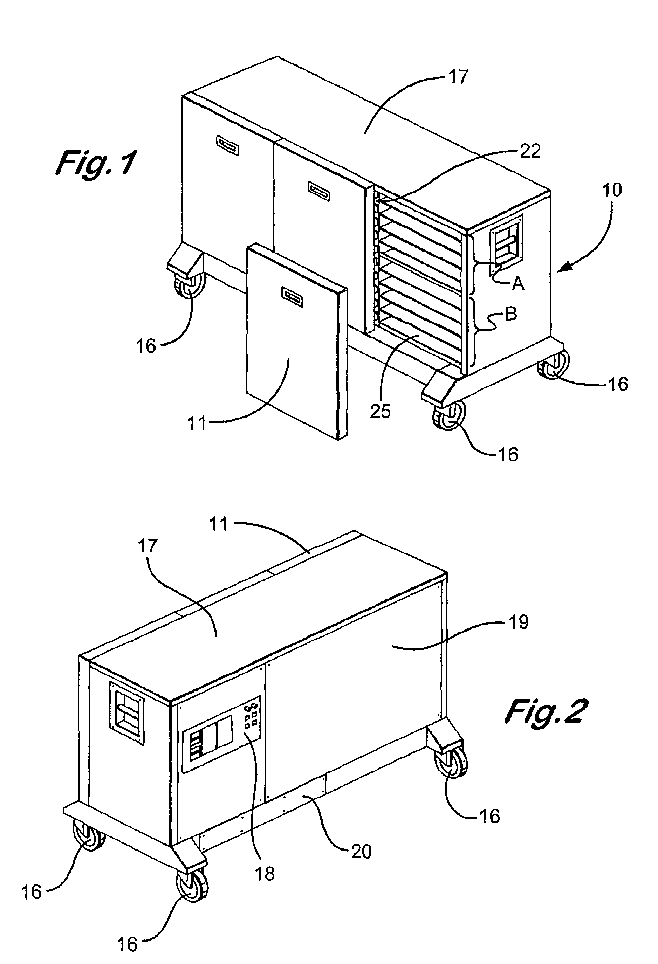

Figure 1 illustrates an embodiment of a mobile storage unit 10 for laptop computers. The unit 10 takes the form of a cabinet provided with four wheels 16 and securable doors in the form of lift-off panels 11 which enclose an internal storage space. The internal storage space is modular and is split into various sections. In the embodiment shown in Figure 1 the internal space is divided into three. The left hand portion of the unit shown is itself divided into upper and lower modules A and B each holding five laptop computers (not shown). Individual docking stations 25 for the computers ensure they are located securely in place within the unit. The modules are respectively provided with their own power recharging circuit, dedicated to that particular module. This modular system allows phased implementation of laptops into the unit capacity with minimal redundant cost. In other words, additional laptops can be readily added to the unit when considered most appropriate. Also the unit can store different types/standards of computer, since a module can be configured for that type of computer.

The modular construction of the unit hence enables different types of laptop computers, for example in modules of 5, to be able to take advantage of the unique facilities offered by the unit. Each of the modules has the ability to deliver a charging supply of varying voltage and current via bespoke charging connectors to meet the needs of that type of computer.

In other words, as the unit can accommodate a number of modules (6 in the example shown), it would be possible to have 6 different types of laptop of varying origins or model type contained in the unit, with all benefiting from the advantages of the unit.

To assist with clear identification of the type of laptop that can be catered for by a particular module, the modules can be complete with unique colour coded charging leads.

Whilst a degree of wiring and substantially all the alarm and radio systems will be retained in the unit's support structure, the power control to the modules and the final distribution and charging indication systems to each of the computers can be built into the modules themselves. This enables rapid exchange and flexibility of use for the modules. In this way, the modules are made relatively "smart" or intelligent in relation to the surrounding support structure of the storage unit. Each module can in this respect be provided with a dedicated transformer, suitable wiring (e.g. 5 charging leads), a suitable display indication means (e.g. 5 LEDs) and a processor so that modules can be readily exchanged depending on the computers to be used with the storage unit. The modules are arranged to be releasably couplable to the storage unit and preferably plug in and pull out, allowing the storage unit to be readily tailored for a particular composition of different computers. When plugged in to the storage unit, the circuitry within the module is connected via a suitable coupling to a general power source provided on the storage unit.

The unit offers a comprehensive alarm system termed (Alarm Alert System (AAS). In this connection, as a standard facility, a locally sounding alarm will be provided within the unit. This provision will have the inherent functionality to be upgraded so that it can be connected to a variety of other detection and warning systems by either a radio or structured cable connection.

The functionality of the alarm can vary but in principle the alarm is activated if one or any combination of the following situations arise:
1. The opening of any access door to stored equipment;
2. The interruption of any 240v supply; and
3. The interruption of connectivity within any installed "alarm tether" (a physical tether to an item of hardware).

The above only applies once the alarm has been set in the first place.

As a prime objective is to ensure that the stored computers and other specified items of equipment have the facility to retain their battery charge for as long and high as possible, a Recharging Alert System (RAS) can be incorporated into the storage unit.

The RAS provision is "intelligent" in so much as it is designed to "know" if any item of equipment, that requires its battery to be recharged, is placed into the unit and has been connected to the appropriate charging circuit.

In such circumstances, an internal alarm will sound to indicate that there is no 240v supply available thus warning the user to either turn the supply on or seek assistance.

With units that are designed to be mobile the RAS may be activated only when the unit is placed in a designated storage/recharging location.

In this respect, at designated storage/recharging locations a Recharging Sensor System RSS may be provided as detailed below:-

The RSS facility takes the format of a device, located on the back of the mobile unit, which communicates with a receiver on the wall at the recharging location.

When the mobile storage unit is located at the recharging location the RSS enables the activation of the internal RAS which is only cancelled by providing a 240v supply to the mobile unit, i.e. plugging it in and turning on the 240v supply.

The only exception to the above is that any unit which has radio functionality will have a separate RAS for the power supply to the transmitter/receiver and this will sound to indicate the need to recharge the system irrespective of the location of the unit.

Whilst conventional power sources have been considered above in relation to the above (i.e. mains and battery), the use of alternative powers sources such as solar, clockwork, wind may be used to supplement or replace such supplies.

The right hand portion of the unit 10 may be provided with an auxiliary module which provides additional storage forms. The auxiliary module may include a retractable platform and items such as tower servers, printers or other peripherals may be housed therein. A 240/1/50 'kettle-type' socket outlet can be incorporated into the auxiliary module to provide power to computer hardware held therein.

The lid 17 provides a stable platform on to which items such as a printer, a personal computer or interactive screen may be safely located. A power supply interface 18 is secured to the rear 19 of the unit. This power supply interface is known as an auxiliary power and data interface (APDI) unit and provides power to the unit and acts as a data interface to other pieces of electronic equipment.

The APDI may be provided with a double 240/1/50 fused socket outlet allowing up to two pieces of computer hardware, for example a PC (personal computer-server) and printer or screen, to be powered-up whilst on the lid of the unit 10. This feature requires a permanent 240/1/50 power supply to be available.

The APDI also has ten Cat 5e connections which offer remote connection to external laptop personal computers or other computer hardware or computer peripherals. This may be by way of a radio link although other suitable communication links may be used, for example, infrared. The radio telecommunication link provided by the APDI enables a laptop user to move freely, within a given range of the unit, whilst maintaining contact with a server on-board the storage unit. The radio link performs the dual function of providing a server link and as a tracking means to locate remote laptops.

Ten DC power outlets rated at approximately 19 Volts each are also provided by the APDI. The DC outlets offer hard-wired connectivity to laptop computers in the vicinity of the storage unit. This provides DC supply for on-line power to laptops with "failed" batteries.

As mentioned above, laptops stored within the unit 10 can be connected to modular charging circuits as illustrated in Figure 1; the power for these circuits being distributed by the APDI. The internal space of the unit 10 is provided with power rails 22, connected electrically to the APDI, which feed power via for example short cables with suitable connections into docked laptops. Each charging circuit may further be provided with indicator neon lights which can be brought on-line to suit the aforementioned phased installation of the laptop modules. A further feature is the inclusion of a manual switch to disengage the internal charging circuits if the DC power outlets are required. Visual indication for this disengagement can also provided by way of, for example, an LED or neon light.

The lower or base portion of the unit 10 includes a service void 20 in which a service tray (not shown) is slidably housed. This void is made secure in order that only authorised electrical service/maintenance engineers can gain such access. The service void is provided with a Cat 5 socket for hardwired connectivity to existing networks and a standard British Telecom/BT (RTM) socket connection which terminates in the auxiliary module.

The service tray is slidably retractable within the service void and provides a secure, stable and safe means for mounting sensitive electrical and electronic equipment together with resultant distribution circuitry. The service tray also provides full earth bonding for all required circuits. The service tray hence acts to distribute the power from the APDI in to the various circuitry of the unit 10.

In this connection, a 240/1/50 circuit to the recharging module is provided to power the individual needs of, for example, up to twenty internally housed laptops or ten recharging outlets as contained within the APDI. Whilst twenty slots are indicated this number can be varied in accordance with requirements. 240/1/50 circuits are also distributed to the auxiliary module and the APDI printer/PC option. The radio telecommunication means or Radio Access Point (RAP) is also powered by a 240/1/50 circuit mounted on the service tray which also is provided with a corresponding battery backup facility.

As mentioned above, the unit 10 has an internal alarm which is activated if the doors 11 are tampered with, when locked. A 240/1/50 power circuit and battery backup facility for this alarm is situated on the service tray. Similarly, a 240/1/50 circuit powers an auto shut-down circuit and reset switch. Further features of the service tray include a 240/1/50 circuit auto rewind main power lead with 30mA RCDs, (residual current detectors) a power failure warning alarm and a power circuit to facilitate cooling ventilation to the service tray itself. Additionally the service tray operates to provide "spike" and "brown out" protection of the main 240/1/50 incoming supply.

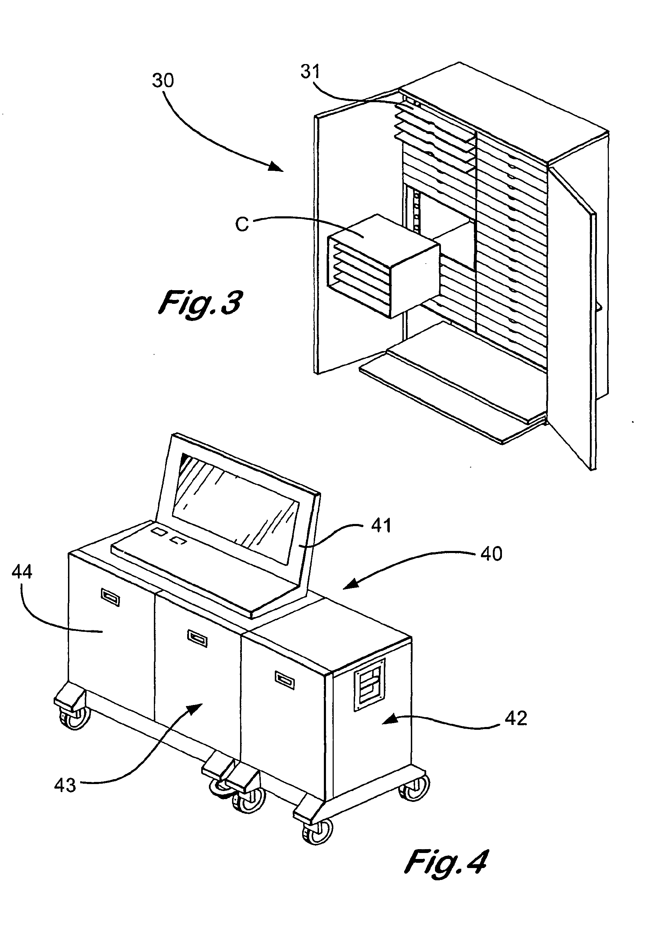

An alternative embodiment of the present invention shown in Figure 3 consists of a static unit 30 rather than a mobile storage unit. Such a unit has similar capabilities to those of the mobile version, in that it has a modular arrangement of docking stations. It cannot be readily moved and therefore used to create mobile networks.

An additional feature of the abovementioned static unit is that the laptops can be further protected by flip-down flaps 31 when secured in the unit. A module C of the static unit is shown withdrawn from the unit for illustration purposes.

In a further preferred embodiment shown in Figure 4, the unit 40 may be provided together with a screen 41, (preferably an integrated interactive screen), the unit and the screen being able to communicate with each other through a radio/infra-red link.

In this embodiment, the unit 40 may be separable into two components, a home unit 42 and a screen unit 43 incorporating a screen support 44 and the screen 41. Hence at the appropriate time the two may be detached, the screen support 44 being wheeled to a suitable viewing point with the home unit 42 being positioned conveniently for an operator. The home unit may contain a projector for projecting onto the screen.

The home unit 42 can have the ability to be powered from a self contained low voltage unit as opposed to having to be permanently connected to a 240v supply. The transfer of data between the screen unit 43, the home unit 42 (projector), a master presentation or trainer laptop and the 20 or so trainee laptops that can be stored in the unit can be by radio/infra-red technology, i.e. wireless.

The home unit 42 and the screen unit 43 are joined to form a single unit for the purpose of movement and storage.

It will be understood that the embodiments described above are merely examples and they may be modified within the scope of the invention as defined in the Claims.

The storage units of the present embodiment of the invention benefit from, inter alia, the following advantages.

The interior of the units is of modular construction thereby allowing its capacity of laptops to be built up or changed without difficulty.

The units can provide both radio and hard wired or structured cable connection to existing networks.

The units can be used with and can provide a network interface with radio compatible and non-radio compatible laptop computers.

The units provide provision to be a mobile radio network, for setting up a local network in the immediate area surrounding the unit. Further, they can be an extension to an existing radio network or indeed a structured cable or hard wired network. The units may moreover be configured to communicate directly with other similar units to establish fully mobile networks.

The units provide full power failure backup to Radio Access Point with for example battery powered laptop computers.

The units are protected against power spikes and "brown outs" and can have 30mA RCDs. The units are alarmed and the radio link can be configured to trigger an alarm signal should a laptop be taken out of a particular radio defined territory.

The units are envisaged to provide 24x7 recharging support and allows for a DC supply for online power to laptops.

Sensitive and dangerous components, e.g. power section, can be located out of harms way within a tamper proof enclosure. A warning system may be used to indicate that recharging has not been activated at the end of use of the laptops.

Also, the units may provide either single or multiple point telephony connectivity.

In combination with a screen they can offer a wireless training and presentation unit that can have the added advantage of being mobile.

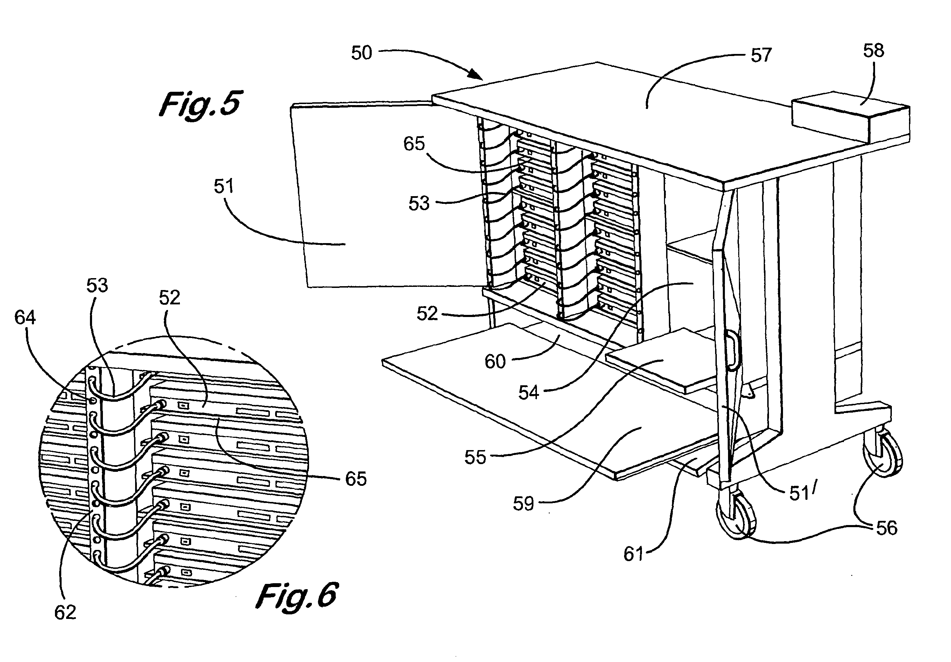

Figure 5 illustrates a further embodiment of a mobile storage unit 50 for laptop computers. The unit 50 takes the form of a cabinet provided with four wheels 56 and securable doors (51, 51') which enclose an internal storage space. The internal storage space is modular and is split into various sections. In the embodiment shown in Figure 5 the internal space is divided into three. The central and left hand portions of the unit shown are further divided into upper and lower modules each holding five laptop computers 52 which are connected to an electronic charging circuit by cables 53. Individual docking stations 65 for the computers ensure they are located securely in place within the unit. This modular system allows phased implementation of laptops into the unit capacity with minimal redundant cost. In other words, additional laptops can be readily added to the unit when considered most appropriate.

An auxiliary module 54 which provides additional storage forms the right hand portion of the unit 50. The auxiliary module 54 is provided with a retractable platform 55 and items such as tower servers, printers or other peripherals may be housed in the auxiliary module. A 240/1/50 'kettle-type' socket outlet is incorporated into the auxiliary module to provide power to computer hardware held therein.

The doors (51, 51') of the unit provide a secure double door access system to the internal storage space. The doors may be secured by mechanical lock and key or other means and, as a further security measure, be alarmed. The wheels 56 have manually activated and deactivated brakes (not shown). In further embodiments the braking system could be linked to an alarm to prevent a thief simply pushing the storage unit away.

The lid 57 of the unit is integrally provided with a foursided handling rail and also provides a stable platform on to which items such as a printer, a personal computer or interactive screen may be safely located. A power supply interface 58 is secured to the lid 57. This power supply interface is known as an auxiliary power and data interface (APDI) unit and provides power to the unit and acts as a data interface to other pieces of electronic equipment.

As shown, the APDI is secured to the rear right hand corner of the lid and may be provided with a double 240/1/50 fused socket outlet allowing up to two pieces of computer hardware, for example a PC (personal computer -server) and printer, to be powered-up whilst on the lid of the unit 50. This feature requires a permanent 240/1/50 power supply to be available.

The APDI also has ten Cat 5e connections which offer remote connection to external laptop personal computers. This may be by way of a radio link although other suitable communication links may be used, for example, infrared. The radio telecommunication link provided by the APDI enables a laptop user to move freely, within a given range of the unit, whilst maintaining contact with a server on-board the storage unit. The radio link performs the dual function of providing a server link and as a tracking means to locate remote laptops.

Ten DC power outlets rated at approximately 19 Volts each are also provided by the APDI. The DC outlets offer hard-wired connectivity to laptop computers in the vicinity of the storage unit. This provides DC supply for on-line power to laptops with "failed" batteries.

As mentioned above, laptops stored within the unit 50 can be connected to individual charging circuits as illustrated in Figures 5 and 6; the power for these circuits being distributed by APDI. The internal space of the unit 50 is provided with power rails 62, connected electrically to the APDI, which feed power via short cables 53 with suitable connections into docked laptops 52 as shown in Figure 6. Each charging circuit is further provided with indicator neon lights 64 which can be brought on-line to suit the aforementioned phased installation of the laptop modules 52. A further feature is the inclusion of a manual switch to disengage the internal charging circuits if the DC power outlets are required. Visual indication for this disengagement can also provided by way of, for example, an LED or neon light.

The docking stations are configured to accept any main-stream laptop computers.

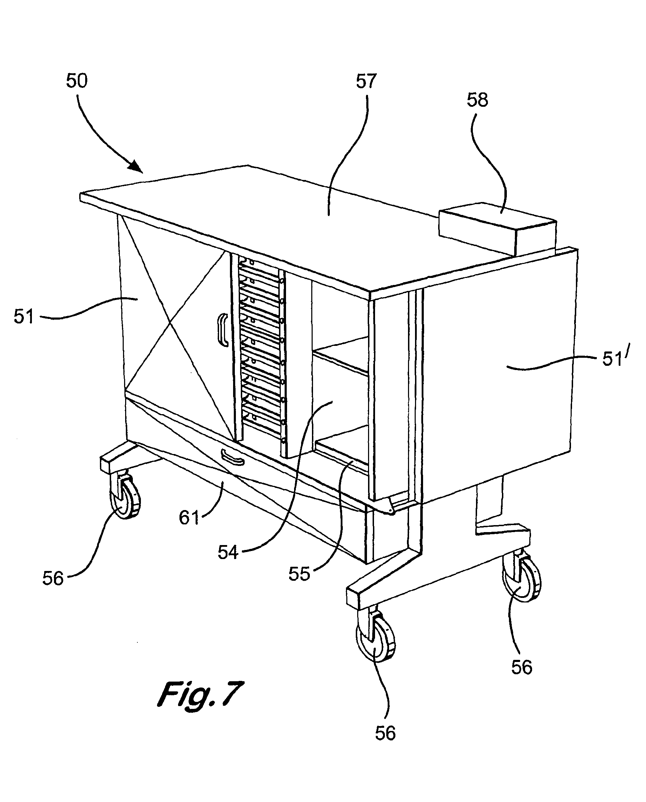

The lower or base portion of the unit 50 includes a service void 60 in which a service tray 59 is slidably housed. A secure drop-down panel 61 allows access as shown in Figures 5 and 7. This panel is made secure in order that only authorised electrical service/maintenance engineers can gain such access. The drop-down panel 61 is also secured by means of, for example, a mechanical lock and key or similar. When the panel is lowered there is micro-switch controlled power cut-off. This prevents users tampering with the hazardous power section. The service void is provided with a Cat 5 socket for hardwired connectivity to existing networks and a standard British Telecom/BT (RTM) socket connection which terminates in the auxiliary module.

The service tray 59 is slidably retractable within the service void 60 and provides a secure, stable and safe means for mounting sensitive electrical and electronic equipment together with resultant distribution circuitry. The service tray also provides full earth bonding for all required circuits. The service tray hence acts to distribute the power from the APDI in to the various circuitry of the unit 50.

In this connection, a 240/1/50 circuit to the recharging module is provided to power the individual needs of up to twenty internally housed laptops or the ten recharging outlets as contained within the APDI. Whilst twenty slots are indicated this number can be varied in accordance with requirements. 240/1/50 circuits are also distributed to the auxiliary module and the APDI printer/PC option. The radio telecommunication means or Radio Access Point (RAP) is also powered by a 240/1/50 circuit mounted on the service tray which also is provided with a corresponding battery backup facility. As mentioned above, the unit 50 has an internal alarm which is activated if the doors (51, 51') are tampered with, when locked. A 240/1/50 power circuit and battery backup facility for this alarm is situated on the service tray 59. Similarly, a 240/1/50 circuit powers an auto shut-down circuit and reset switch. Further features of the service tray include a 240/1/50 circuit auto rewind main power lead with 100 mA earth leakage protection, a power failure warning alarm and a power circuit to facilitate cooling ventilation to the service tray itself. Additionally the service tray operates to provide "spike" and "brown out" protection of the main 240/1/50 incoming supply.

An alternative embodiment of the present invention (not shown) consists of a static rather than a mobile storage unit. Such a unit has similar capabilities to the mobile version but cannot be readily moved and therefore used to create mobile networks.

An additional feature of the abovementioned static unit is that the laptops can be further protected by flip-down flaps when secured in the unit.

It will be understood that the embodiments described above are merely examples and they may be modified within the scope of the invention as defined in the claims.

The unit of the present embodiment of the invention benefits from, inter alia, the following advantages.

The interior of the unit is of modular construction thereby allowing its capacity of laptops to be built up or changed without difficulty.

The unit can provide both radio and hard wired or structured cable connection to existing networks.

The unit can be used with and can provide a network interface with radio compatible and non-radio compatible laptop computers.

The unit provides provision to be a mobile radio network, for setting up a local network in the immediate area surrounding the unit. Further, it can be an extension to an existing radio network or indeed a structured cable or hard wired network. The unit may moreover be configured to communicate directly with other similar units to establish fully mobile networks.

The unit provides full power failure backup to Radio Access Point with for example battery powered laptop computers.

The unit is protected against power spikes and "brown outs" and can have 100mA earth leakage protection. The unit is itself alarmed and the radio link can be configured to trigger an alarm signal should a laptop be taken out of a particular radio defined territory.

The unit is envisaged to provide 24x7 recharging support and allows for a DC supply for online power to laptops.

Sensitive and dangerous components, e.g. power section, can be located out of harms way within a tamper proof enclosure. A warning system may be used to indicate that recharging has not been activated at the end of use of the laptops.

Also, the unit may provide either single or multiple point telephony connectivity.

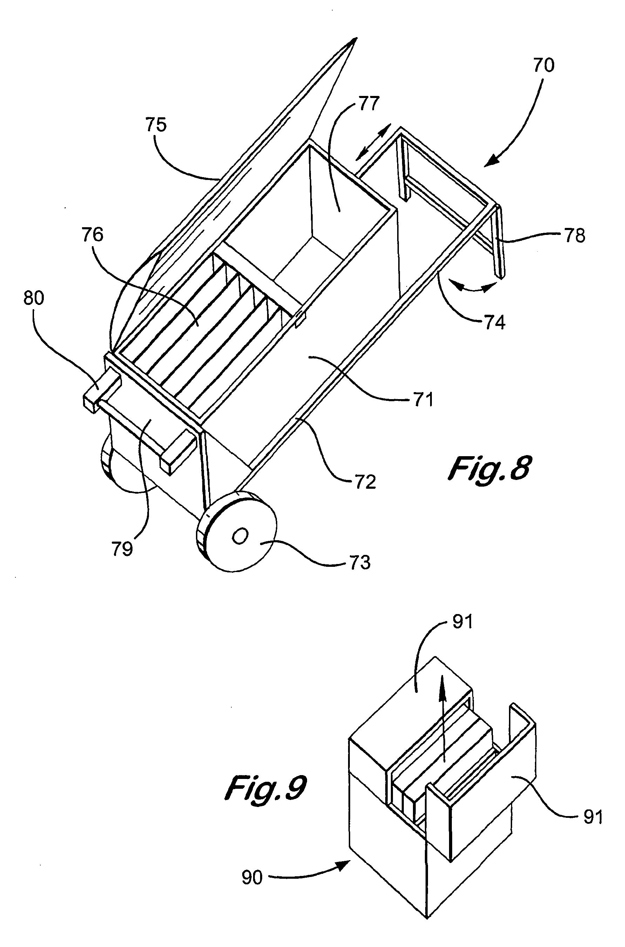

As shown in Figure 8, the unit 70 generally takes the form of a enclosure 71 mounted on a frame 72. The frame includes at one end a wheel assembly 73 and at another end a handle assembly 74.

The enclosure 71 has a securable lid 75 which when closed prevents unauthorised access to an internal storage space, the internal storage space being modular and split into various sections.

In the embodiment shown, the internal storage space is divided into a computer storage bay 76 and a peripheral storage area 77. The storage bay 76 is further divided into six discrete computer docking stations that can each accept a laptop computer. In addition, the peripheral storage area can be converted into extra laptop storage space if required.

The unit can incorporate a computer recharging facility for recharging any computers housed in the docking stations.

The docking stations are arranged in a plurality of modules of like docking stations and each module is provided with an independent recharging circuit.

The handle assembly 74 takes the form of a pivotably attached drop-down support 78. The handle is configured to readily hook over the lip of a car boot and seat on the floor of the boot. As such, that unit can be coupled or hitched to a vehicle to facilitate the transfer of computers from within the storage unit to the car boot or a dedicated transit box (see Figure 9) located inside the vehicle. The drop down support 78 together with the wheel assembly, further presents a secure fixed stand for holding the enclosure 71 in a horizontal elevation when the unit is positioned on a level surface, such that the docking stations are accessible with the lid 75 open, without fear of any housed computers falling from the unit.

In addition, at wheel assembly end 79 of the frame, there is provided a further support 80, which together with the wheel assembly 73 forms a further stand allowing the unit to stand in a vertical orientation, on its end. In this way the "footprint" of the unit is minimised allowing it to be positioned in areas where there is limited space.

Figure 9 illustrates a transit box 90 for use with the unit. The transit box 90 takes the form of a storage box with a securable lid 91. In use, computers are loaded into the transit box placed within for example a vehicle. At a point of delivery, the mobile storage unit is removed from a transfer vehicle and is hitched to the vehicle by means of the drop-down support. This drop-down support is unfolded to lie substantially perpendicular to the frame, and hooks over the lip of the vehicle boot, and seats on the vehicle boot floor. In this secure position, the laptop computers are transferred individually from the transit box to the storage unit. When the computers have been transferred, the lid is shut and locked and the unit is wheeled to the point of delivery. At this point the unit can be placed in the upright or horizontal position, and the computers distributed once the lid is opened. The reverse occurs when the computers have been utilised and require further transportation in the transfer vehicle.

Using the unit in this way, the security, health and safety, and delivery damage aspects of transporting valuable but heavy computer apparatus can be improved. Using the unit a single person can safely transport a number of computers and associated apparatus from one location to another.

It will be understood that the example described is merely an example and may be modified within the scope of the invention as defined in the claims.

For example, the unit may be provided with an alarm, for example incorporated into the lid. Further, the unit may have a dedicated server such that it can be used for networking with the computers stored therein. The lid 75 also may be dome-shaped, providing extra storage space for smaller peripherals. The unit may furthermore have a communication link allowing, for example, Internet and voice communication. Further, the securable enclosure 71 may be removably attachable to the frame 72.

## Claims

1. A lockable storage unit (10) for securely storing and recharging a plurality of computers therein, the storage unit comprising a plurality of computer docking stations (25), the unit being **characterized in that** the docking stations are arranged into a plurality of discrete modules (A, B) of like docking stations; wherein each module is provided with an independent power recharging circuit and dedicated charging connectors compatible with the computers to be received in the docking stations of that module, thereby allowing computers of different specifications to be stored and recharged within different modules of the unit.

2. A storage unit according to claim 1, wherein the docking stations of a module are physically configured to accept only computers appropriate to that module.

3. A storage unit according to claim 1 or 2, wherein the docking stations of a particular module are marked so that they can be matched with particular computers.

4. A storage unit according to claim 3, wherein the marking includes colour.

5. A storage unit according to any preceding claim, wherein the unit further comprises a communication link for linking the unit to remote computers, a network or other similar units.

6. A storage unit according to claim 5, wherein the communication link is a radio or infra-red link.

7. A storage unit according to any preceding claim, wherein power is provided to said unit through a power supply interface (18) which is provided to said unit.

8. A storage unit according to claim 7, wherein said power supply interface further comprises radio connection means for enabling a radio link between the unit and one or more of said computers or a separate hardware item such as a remote screen.

9. A storage unit according to any preceding claim, wherein said unit is mobile.

10. A storage unit according to any preceding claim, wherein said unit takes the form of a wheeled trolley.

## Patentansprüche

1. Abschließbare Aufbewahrungseinheit (10) zum sicheren Verstauen und Wiederaufladen einer Mehrzahl von Computern in derselben, wobei die Aufbewahrungseinheit eine Mehrzahl von Computer-Dockingstationen (25) aufweist, und sich die Einheit **dadurch** auszeichnet, dass die Dockingstationen in einer Mehrzahl von gesonderten Modulen (A, B) für ähnlichen Dockingstationen angeordnet sind, wobei jeder Modul mit einer unabhängigen Energiewiederaufladungsschaltung und für spezielle Zwecke bestimmte Ladeverbindungen versehen ist, welche mit den in den Dockingstationen des Moduls aufzunehmenden Computer kompatibel sind, wodurch Computer mit unterschiedlichen Spezifikationen in unterschiedlichen Modulen der Einheit aufbewahrt und wiederaufgeladen werden können.

2. Aufbewahrungseinheit nach Anspruch 1, bei der die Dockingstationen eines Moduls physikalisch derart konfiguriert sind, dass nur für diesen Modul geeignete Computer akzeptiert werden.

3. Aufbewahrungseinheit nach Anspruch 1 oder 2, bei der die Dockingstationen eines speziellen Moduls derart gekennzeichnet sind, dass sie nur zu speziell gekennzeichneten Computern passen.

4. Aufbewahrungseinheit nach Anspruch 3, bei der die Kennzeichnung eine Farbe umfasst.

5. Aufbewahrungseinheit nach einem der vorangehenden Ansprüche, bei der die Einheit ferner eine Kommunikationsverbindung zum Verbinden der Einheit mit ferngesteuerten Computern, einem Netzwerk oder anderen ähnlichen Einheiten aufweist.

6. Aufbewahrungseinheit nach Anspruch 5, bei der die Kommunikationsverbindung eine Funkverbindung oder eine Infrarotverbindung ist.

7. Aufbewahrungseinheit nach einem der vorangehenden Ansprüche, bei der die Einheit Ober eine Energieversorgungsschnittstelle (28) mit Energie versorgt wird, welche für diese Einheit vorgesehen ist.

8. Aufbewahrungseinheit nach Anspruch 7, bei der die Energieversorgungsschnittstelle ferner eine Funktverbindungseinrichtung zum Herstellen einer Funkverbindung zwischen der Einheit und einem oder mehreren Computern oder einer anderen gesonderten Hardwareeinrichtung, wie einem funkgesteuerten Bildschirm, aufweist.

9. Aufbewahrungseinheit nach einem der vorangehenden Ansprüche, bei der die Einheit mobil ist.

10. Aufbewahrungseinheit nach einem der vorangehenden Ansprüche, bei der die Einheit in Form eines mit Rädern versehenen Wagens ausgelegt ist.

## Revendications

1. Unité de stockage verrouillable (10) pour stocker et recharger de façon sûre une pluralité d'ordinateurs dans celle-ci, l'unité de stockage comprenant une pluralité de stations d'accueil d'ordinateur (25), l'unité étant **caractérisée par le fait que** les stations d'accueil sont arrangées suivant une pluralité de modules discrets (A, B) de stations d'accueil similaires ; dans laquelle chaque module est doté d'un circuit de recharge de puissance indépendant et de connecteurs de charge dédiés compatibles avec les ordinateurs devant être reçus dans les stations d'accueil de ce module, permettant ainsi aux ordinateurs de différentes spécifications d'être stockés et rechargés à l'intérieur de différents modules de l'unité.

2. Unité de stockage selon la revendication 1, dans laquelle les stations d'accueil d'un module sont configurées physiquement pour n'accepter que les ordinateurs appropriés à ce module.

3. Unité de stockage selon l'une des revendications 1 ou 2, dans laquelle les stations d'accueil d'un module particulier sont marquées de telle sorte qu'elles peuvent être appariées à des ordinateurs particuliers.

4. Unité de stockage selon la revendication 3, dans laquelle le marquage comprend de la couleur.

5. Unité de stockage selon l'une quelconque des revendications précédentes, dans laquelle l'unité comprend en outre une liaison de communication pour relier l'unité à des ordinateurs à distance, à un réseau ou à d'autres unités similaires.

6. Unité de stockage selon la revendication 5, dans laquelle la liaison de communication est une liaison radio ou infrarouge.

7. Unité de stockage selon l'une quelconque des revendications précédentes, dans laquelle la puissance est fournie à ladite unité par l'intermédiaire d'une interface d'alimentation en courant (18) qui est fournie à ladite unité.

8. Unité de stockage selon la revendication 7, dans laquelle ladite interface d'alimentation en courant comprend en outre un moyen de connexion radio pour permettre une liaison radio entre l'unité et un ou plusieurs desdits ordinateurs ou un élément de matériel séparé tel qu'un écran à distance.

9. Unité de stockage selon l'une quelconque des revendications précédentes, dans laquelle ladite unité est mobile.

10. Unité de stockage selon l'une quelconque des revendications précédentes, dans laquelle ladite unité revêt la forme d'un chariot à roues.
